# EUROPEAN PATENT APPLICATION

(11) **EP 4 546 500 A1**
(43) Date of publication of application: **30.04.2025**
(21) Application number: 23846885.4
(22) Date of filing: 17.07.2023
(51) Int. Cl.: H01M 10/42, H01M 10/0587, H01M 10/0585, H01M 10/052, H01M 4/02

(54) **BATTERY INCLUDING SAFETY FUNCTION LAYER**

(30) Priority: 27.07.2022 KR 20220093212; 06.10.2022 KR 20220128065
(71) Applicant: Samsung Electronics Co., Ltd., Suwon-si, Gyeonggi-do 16677 (KR)
(72) Inventor: LEE, Yeonil, Suwon-si, Gyeonggi-do 16677 (KR); JUNG, Sinyoung, Suwon-si, Gyeonggi-do 16677 (KR); CHOI, Woongchul, Suwon-si, Gyeonggi-do 16677 (KR)
(74) Representative: Gulde & Partner
(86) International application number: PCT/KR2023/010166
(87) International publication number: WO 2024/025226

(57) **Abstract**

A battery including a safety function layer is disclosed. A battery according to various embodiments of the present invention may comprise: a battery case dividing the interior and the exterior of the battery; and an electrode assembly including at least one positive electrode positioned inside the battery case, at least one negative electrode positioned inside the battery case to face the positive electrode, and at least one separator disposed between the positive electrode and the negative electrode. The positive electrode may include a positive electrode safety function layer disposed in an area including the outermost positive electrode area, the area being closest to the inner side of the battery case in the positive electrode.

## Description

### [Technical Field]

Various embodiments disclosed herein relate to a battery and, more particularly, to a battery including a safety function layer.

### [Background Art]

With the development of portable electronic devices and electric vehicles, batteries capable of storing and outputting electric energy are widely used. Lithium-ion batteries are secondary batteries, which are lightweight and have high energy density and good charge/discharge characteristics, and are widely used in fields such as portable electronic devices, electric vehicles, and energy storage systems (ESS). The lithium-ion batteries include a negative electrode that releases lithium-ions into the electrolyte during discharge, a positive electrode that accepts lithium-ions in an oxidized state during discharge, the lithium-ions being released from the negative electrode, and a separator that prevents direct contact between the negative electrode and the positive electrode.

Lithium-ion batteries may be subject to various damages, such as external pressure, impact, and/or penetration. When the damage described above leads to contact between the negative electrode and the positive electrode, a short-circuit current may occur, which may cause heat generation, ignition, or thermal runaway or fire from reactions of positive and/or negative electrode active materials. Various safety measures are being actively pursued and implemented to reduce the risk of fire in lithium-ion batteries.

### [Disclosure of Invention]

### [Technical Solution]

To reduce the risk of fire, a positive electrode of a battery may include various positive electrode safety function layers. In addition, a negative electrode of the battery may include various negative electrode safety function layers. However, since the volume of the entire cell including the positive electrode and the negative electrode increases due to the positive electrode safety function layer and/or the negative electrode safety function layer, the power density and energy density of the battery may decrease. In addition, some positive electrode safety function layers may increase internal resistance, and thus cause a further decrease in the power density.

Various embodiments disclosed herein may provide a battery having improved stability and energy density.

A battery according to various embodiments of the disclosure may include a battery case configured to divide the inside and the outside of the battery, and an electrode assembly including at least one positive electrode positioned inside the battery case, at least one negative electrode positioned inside the battery case to face the positive electrode, and at least one separator positioned between the positive electrode and the negative electrode. The positive electrode may include a positive electrode safety function layer positioned in an area which includes an outermost positive electrode area and is closest, among areas of the positive electrode, to the inner surface of the battery case.

In various embodiments, the battery may be a winding-type battery in which the electrode assembly is wound in a mutually overlapping manner, and the positive electrode, the negative electrode, and the separator may be wound such that an outermost positive electrode area is positioned toward the outside of the battery.

In various embodiments, among areas of the positive electrode, the positive electrode safety function layer may extend from the outermost positive electrode area to at least a part of an inner positive electrode area which is an area wound in a space positioned toward the inside of the battery, and the positive electrode safety function layer may be configured such that, among areas of the positive electrode, a thickness of the positive electrode safety function layer disposed in the outermost positive electrode area is thicker than the thickness of the positive electrode safety function layer extended to the inner positive electrode area.

In various embodiments, the thickness of the positive electrode safety function layer may be reduced in a stepwise manner toward the inside of the battery.

In various embodiments, the thickness of the positive electrode safety function layer may be continuously reduced toward the inside of the battery.

In various embodiments, the battery may be a stack-type battery obtained by alternately stacking the plurality of positive electrodes, the plurality of negative electrodes, and the plurality of separators, and
the outermost positive electrode area may correspond to the positive electrodes positioned in the uppermost layer and the lowermost layer among the plurality of stacked positive electrodes.

In various embodiments, the positive electrode safety function layer may be further disposed in at least a part of the inner positive electrode area corresponding to the positive electrodes stacked between the outermost positive electrode areas, and the positive electrode safety function layer may be configured such that, among areas of the positive electrode, a thickness of the positive electrode safety function layer disposed in the outermost positive electrode area is thicker than a thickness of the positive electrode safety function layer disposed in the inner positive electrode area.

In various embodiments, the thickness of the positive electrode safety function layer may be gradually reduced toward the inside of the battery.

In various embodiments, the positive electrode may include a positive electrode current collector and a positive electrode active material positioned on a surface of the positive electrode current collector, and
the positive electrode safety function layer may be positioned between the positive electrode current collector and the positive electrode active material.

In various embodiments, the positive electrode may include the positive electrode current collector and the positive electrode active material positioned on a surface of the positive electrode current collector, and
the positive electrode safety function layer may coat a surface of the positive electrode active material.

In various embodiments, the positive electrode safety function layer may include a positive temperature coefficient (PTC) material.

In various embodiments, the PTC material may include a polymer composite.

In various embodiments, the positive electrode safety function layer may include a phosphate-based olivine material.

In various embodiments, the battery may include a short-circuit protection layer disposed in the batter case to be spaced apart from the outermost positive electrode area while surrounding at least a part of an outer peripheral surface of the outermost positive electrode area, the short-circuit protection layer being electrically connected to the negative electrode and having a conductive material.

In various embodiments, the width of the short-circuit protection layer may be narrower than the width of the outermost positive electrode area.

In various embodiments, the battery may further include a negative electrode safety function layer disposed in an area of the negative electrode corresponding to an area of the positive electrode where the positive electrode safety function layer is disposed.

According to various embodiments of the disclosure, a battery may include a battery case configured to divide the inside and the outside of the battery, at least one positive electrode positioned inside the battery case, at least one negative electrode positioned inside the battery case to face the positive electrode, at least one separator positioned between the positive electrode and the negative electrode, and a safety function layer positioned in at least one of the positive electrode and the negative electrode. The thickness of the safety function layer may increase toward a position relatively closer to the outside of the battery.

In various embodiments, the safety function layer may be disposed in the positive electrode and may include a positive temperature coefficient (PTC) material.

In various embodiments, the PTC material may include a polymer composite.

In various embodiments, the safety function layer may be disposed in the positive electrode and may include a phosphate-based olivine material.

According to various embodiments disclosed herein, a battery having improved safety against penetration from the outside and improved energy density and power density may be provided due to the positive electrode safety function layer disposed in an area close to a case (or pouch) of the battery.

### [Brief Description of Drawings]

In connection with the description of the drawings, the same or similar reference numerals may be used for the same or similar components.
FIG. 1A schematically illustrates the structure of a battery according to various embodiments.
FIG. 1B schematically illustrates the structure of a battery according to various embodiments.
FIG. 1C schematically illustrates the structure of a battery according to various embodiments.
FIG. 2A is a schematic diagram illustrating a cross-section of a stack-type battery according to various embodiments.
FIG. 2B is a schematic diagram illustrating a cross-section of a winding-type battery according to various embodiments.
FIG. 2C illustrates a state in which the wound components of FIG. 2B are unwound.
FIGS. 3A to 3C are enlarged cross-sectional views illustrating the outermost positive electrode area of a battery according to various embodiments.
FIGS. 4A to 4D are cross-sectional views of a battery according to various embodiments.
FIG. 5 is a cross-sectional view of a battery according to various embodiments.

### [Mode for the Invention]

Hereinafter, preferred embodiments of the disclosure will be described in detail with reference to the attached drawings. In these drawings, for example, the size and shape of members may be exaggerated for convenience and clarity of explanation, and variations in the illustrated shapes may be expected during actual implementation. Therefore, the embodiments of the disclosure should not be construed as being limited to the specific shapes of the areas illustrated in this specification.

Reference numerals in the drawings refer to the same elements throughout the drawings. In addition, as used herein, the term "and/or" includes any and all combinations of any one or more of the listed items.

The embodiments of the disclosure are provided to more completely explain the disclosure to those skilled in the art, and the following embodiments may be modified in various different forms and the scope of the disclosure is not limited to the embodiments described herein. Rather, these embodiments are provided so that this disclosure will be more complete and thorough, and will fully convey the spirit of the disclosure to those skilled in the art.

The term used herein is used to describe embodiments only and is not intended to limit the scope of the disclosure. In addition, even if the singular is described herein, the plural referent may be included unless the context clearly dictates otherwise. In addition, the terms "comprise" and/or "comprising" as used herein specify the presence of stated features, numbers, steps, operations, members, elements, and/or groups thereof, but do not exclude the presence or addition of other features, numbers, operations, members, elements, and/or groups thereof. In addition, it will be understood by those skilled in the art that a structure or shape disposed "adjacent" to another feature may have a part that overlaps or is disposed beneath the adjacent feature.

In this specification, relative terms such as "below," "above," "upper," "lower," "horizontal," or "vertical" may be used to describe the relationship of one element, layer, or area to another element, layer, or area, as depicted in the drawings. It should be understood that these terms encompass directions other than the directions depicted in the drawings.

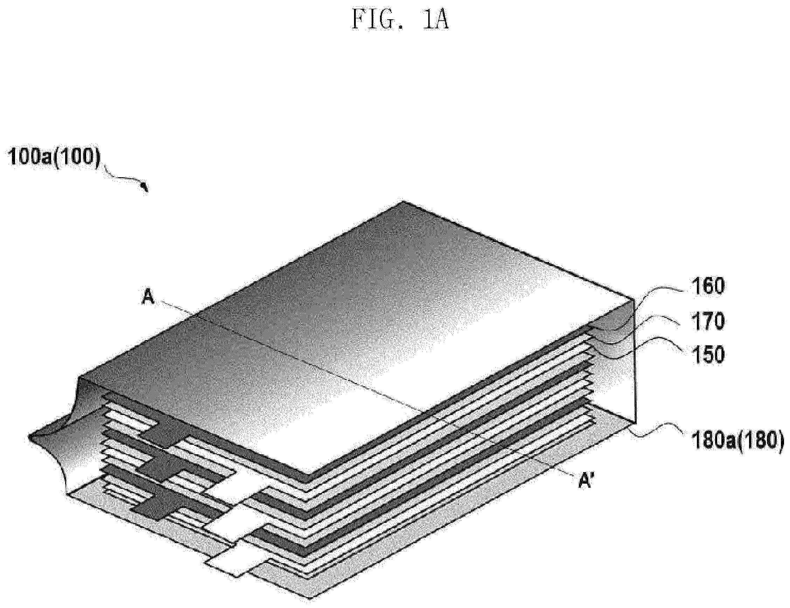

FIGS. 1A to 1C schematically illustrate the structure of a battery according to various embodiments.

Referring to FIGS. 1A to 1C, a battery 100 (e.g., a stack-type battery 100a, a cylindrical battery 100b, or a jellyroll-type battery 100c) may include a positive electrode 160, a negative electrode 150, and a separator 170. The positive electrode 160 may be an electrode that acts as a cathode when the battery 100 is discharged and absorbs lithium-ions from an electrolyte included in the battery 100 to form a lithium compound, and acts as an anode when the battery 100 is charged and releases lithium-ions. The positive electrode may include a positive electrode current collector including a metal foil such as aluminum, and a positive electrode active material. The positive electrode active material may include a lithium compound, for example, an olivine-type compound such as lithium cobalt oxide (LixCoO₂), lithium nickel oxide (LixNiO₂), lithium nickel cobalt oxide (Lix(NiCo)O₂), lithium nickel cobalt manganese oxide (Lix(NiCoMn)O₃), lithium nickel cobalt aluminum oxide (Lix(NiCoAl)O₂), spinel-type lithium manganese oxide (LixMn₂O₄), manganese dioxide (MnO₂), lithium iron phosphate (LixFePO₄), and/or lithium manganese phosphate (LixMnPO₄).

The negative electrode 150 may be an electrode that acts as an anode when the battery 100 is discharged to release lithium-ions through the electrolyte included in the battery 100, and acts as a cathode when the battery 100 is charged to store reduced lithium atoms. The negative electrode 150 may include a negative electrode current collector including a metal foil such as copper, and a negative electrode active material. The negative electrode active material may include, for example, various silicon-based compounds such as artificial and/or natural graphite, silicon oxide, silicon nitride, and/or silicon carbide that store lithium by intercalation, and/or lithium metal that stores metal phase lithium or various alloys or metal compounds thereof.

The separator 170 may be a member that prevents electrical contact between the positive electrode 160 and the negative electrode 150 while allowing lithium-ions to pass therethrough. In some embodiments, the separator 170 may include a polymer material such as polyethylene or polypropylene having microscopic pores of a size that allows lithium-ions to pass therethrough. The minimum unit of the battery 100 including the negative electrode 150, the positive electrode 160, and the separator 170 may be referred to as an electrode assembly.

A battery case 180 (e.g., the battery case 180a, the battery case 180b, or the battery case 180c) may be a container having an internal space in which the negative electrode 150, the positive electrode 160, and the separator 170 are wound, folded, or stacked and accommodated. For example, the battery case 180 may include a metal (e.g., aluminum or stainless steel), a polymer material, and/or a composite or laminate thereof. An organic electrolyte (not shown) may be injected and sealed into the battery case 180. For example, the organic electrolyte may include a lithium salt and an organic solvent. The lithium salt may be LiPF₆, LiBF₄, LiSbF₆, LiAsF₆, LiN(SO₂C₂F₅)₂, Li(CF₃SO₂)₂N, LiN(SO₃C2F₅)₂, LiC₄F₉SO₃, LiClO₄, LiAlO₂, LiAlCl₄, LiCl, LiI, and LiB(C₂O₄)₂, or mixtures thereof. For example, the organic solvent may include a cyclic carbonate such as ethylene carbonate, butylene carbonate, or vinylene carbonate, a linear carbonate such as dimethyl carbonate, methyl ethyl carbonate, or diethyl carbonate, an acetate compound such as methyl acetate, ethyl acetate, or propyl acetate, and a fluorinated organic compound thereof in which at least one hydrogen atom is replaced with fluorine (F).

Referring to FIG. 1A, the battery 100 according to various embodiments may be a stack-type battery 100a in which at least one electrode assembly is stacked and positioned in the internal space of a battery case 180a. The battery case 180a may be, for example, a square can or a soft pouch.

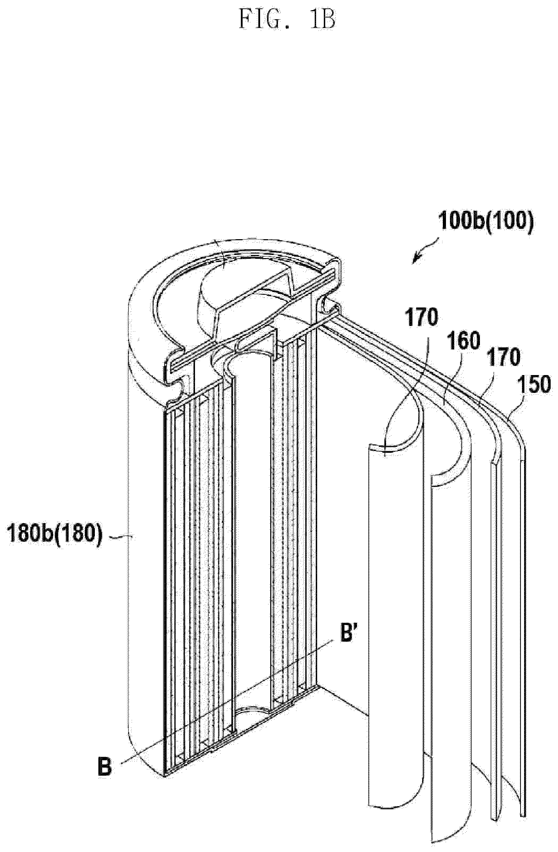

Referring to FIG. 1B, the battery 100 according to various embodiments may be a cylindrical battery 100b in which at least one electrode assembly is wound and positioned in the internal space of a battery case 180b. The battery case 180b may be, for example, a cylindrical or similar pillar-shaped can.

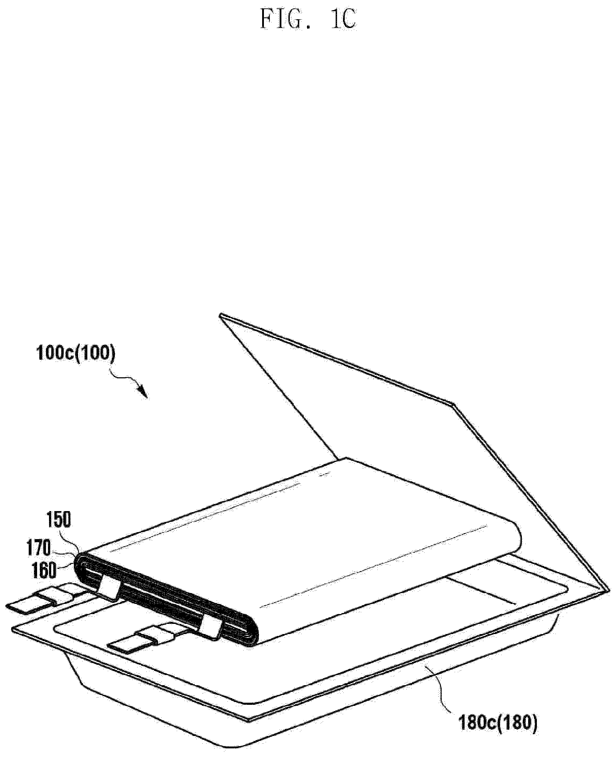

Referring to FIG. 1C, the battery 100 according to various embodiments may be a jellyroll-type battery 100c in which at least one electrode assembly is wound in a stadium-shaped cross-section and positioned in the internal space of a battery case 180c. The battery case 180c may be, for example, a square can or a soft pouch. The cylindrical battery 100b and the jellyroll-type battery 100c share the same characteristic in which the battery cells are wound and positioned inside the battery case 180b, 180c, and thus may be collectively referred to as a "winding-type" battery 100b, 100c.

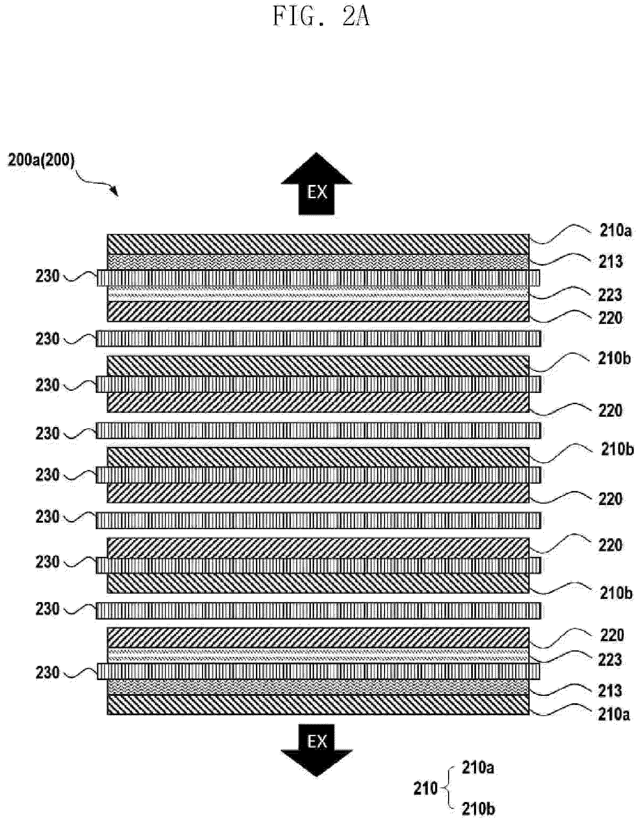

FIG. 2A is a schematic diagram illustrating a cross-section of a stack-type battery 200a according to various embodiments.

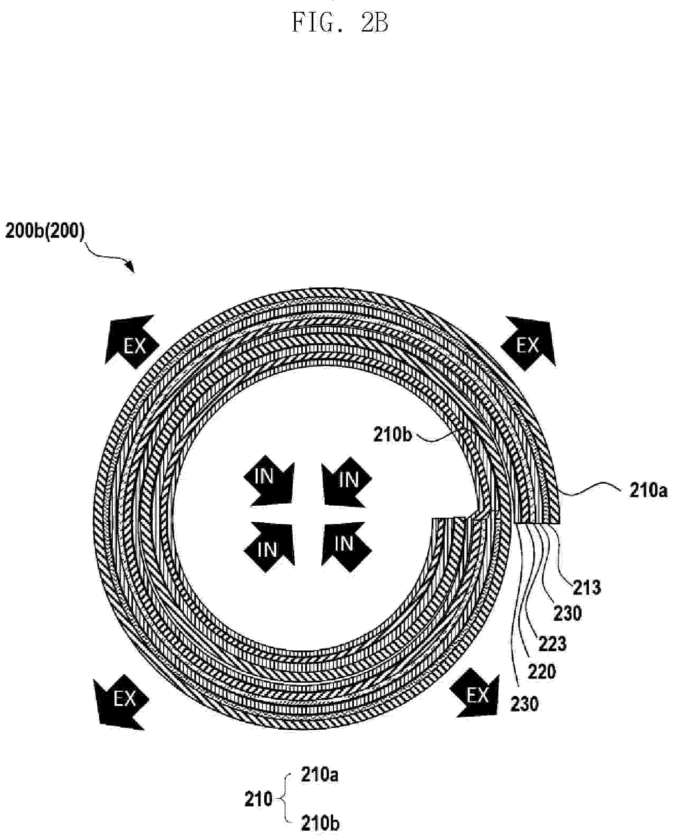

FIG. 2B is a schematic diagram illustrating a cross-section of a winding-type battery 200b according to various embodiments.

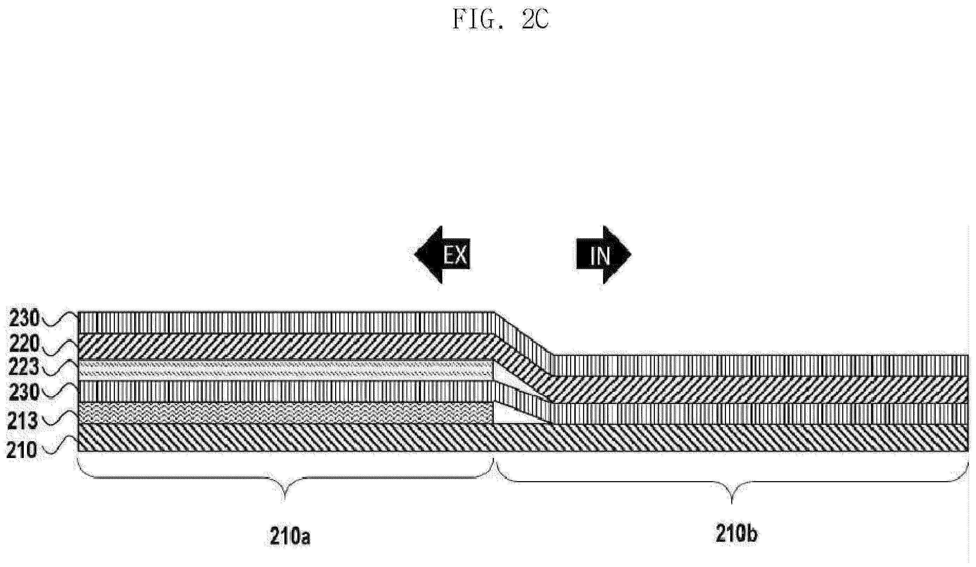

FIG. 2C illustrates a state in which the wound components of FIG. 2B are unwound.

The cross-section of FIG. 2A may be, for example, a cross-section taken along line A-A' of FIG. 1A.

The cross-section of FIG. 2B may be, for example, a cross-section taken along line B-B' of FIG. 1B.

Referring to FIG. 2A, the stack-type battery 200a (e.g., the stack-type battery 100a of FIG. 1A) may include at least one negative electrode 220, at least one separator 230, and at least one positive electrode 210 that have a plate shape and are sequentially stacked with each other. In at least one positive electrode 210, the area of the positive electrode 210 closest to the outside of the stack-type battery 200a (for example, the area located in the direction indicated by EX in FIG. 2A) may be defined as an "outermost positive electrode area 210a". For example, in the stack-type battery 200a, the areas closest to the outside of the stacked plate-shaped positive electrodes 210, for example, the areas located at the uppermost layer and the lowermost layer among the stacked positive electrodes 210, may be defined as the outermost positive electrode areas 210a. In the stack-type battery 200a, the positive electrode 210 stacked between the outermost positive electrode areas 210a may be defined as inner positive electrode area 210b. The detailed configuration of the positive electrode 210 will be described later.

Referring to FIGS. 2B and 2C, the winding-type battery 200b (e.g., the winding-type battery 100b, 100c of FIG. 1B or 1C) may include a negative electrode 220, a separator 230, and a positive electrode 210 that have a plate shape and are sequentially stacked with each other and may configure a structure in which the negative electrode 220, the separator 230, and the positive electrode 210 are wound in a spiral shape and overlap from the center to the outside (e.g., in the direction indicated by EX in FIG. 2B). Among areas of the positive electrode 210, the area of the positive electrode 210 closest to the outside of the battery (e.g., in the direction indicated by EX in FIG. 2B) may be defined as an "outermost positive electrode area 210a"', and in the winding-type battery 200b, the outermost wound area may be defined as the outermost positive electrode area 210a. In the winding-type battery 200b, the area wound inside the outermost positive electrode area 210a may be defined as an inner positive electrode area 210b.

Only a cylindrical battery (e.g., the cylindrical battery 100b of FIG. 1B) among the winding-type batteries 200b is illustrated in FIGS. 2B and 2C, but it will be apparent to those skilled in the art that the description of the winding-type battery 200b according to various embodiments of the disclosure is applicable not only to cylindrical batteries but also to jellyroll-type batteries (e.g., the jellyroll-type battery 100c of FIG. 1C).

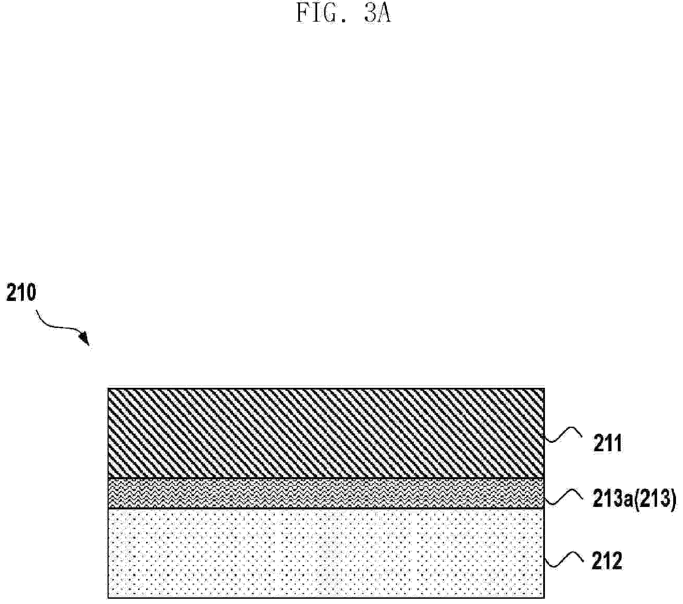

Referring to FIGS. 2A to 2C, the positive electrode 210 may include a positive electrode safety function layer 213 disposed at least in the outermost positive electrode area 210a of the positive electrode 210. In case that damage occurs due to factors such as penetration and/or pressure from the outside, the positive electrode safety function layer 213 may be a member that reduces the risk of fire or other unsafe situations occurring when the negative electrode 220 of the battery comes into direct contact with the positive electrode active material (e.g., the positive electrode active material 212 of FIG. 3A) and/or the positive electrode current collector (e.g., the positive electrode current collector 211 of FIG. 3A), described later. In various embodiments, the positive electrode safety function layer 213 may be disposed in an area of the positive electrode 210 including the outermost positive electrode area 210a and other areas, as well as the outermost positive electrode area 210a. This will be described later.

Within the battery 200 (e.g., the battery 200a or the battery 200b), an area having a relatively high risk of damage due to puncture and/or pressure is an area close to the outside of the battery 200. Thus, the risk of damage from the outside may be effectively reduced by at least placing the positive electrode safety function layer 213 in the outermost positive electrode area 210a of the positive electrode 210. In addition, the adverse effects on the energy density and/or power density of the battery caused by the positive electrode 210 including more positive electrode safety function layers 213 may be reduced by not placing the positive electrode safety function layer 213 in the inner positive electrode area 210b or placing the positive electrode safety function layer 213 in a smaller amount.

In various embodiments with reference to FIGS. 2A to 2C, the negative electrode 220 may include a negative electrode safety function layer 223 disposed in an area of the negative electrode 220 corresponding to an area of the positive electrode 210 where the positive electrode safety function layer 213 is disposed.

FIGS. 3A to 3C are enlarged cross-sectional views illustrating an outermost positive electrode area of a battery according to various embodiments.

Referring to FIGS. 3A to 3C, the positive electrode 210 (e.g., the positive electrode 160 of FIGS. 1A to 1C) of a battery (e.g., the battery 100 or the battery 200) may include a positive electrode current collector 211, a positive electrode active material 212, and a positive electrode safety function layer 213.

The positive electrode current collector 211 may be a member configured to collect charges generated by the positive electrode active material 212 and supply power to the outside of the battery or receive power from the outside to charge the battery. In various embodiments, the current collector may include a plate-shaped metal, particularly a metal such as aluminum that has high electrochemical stability in the electrode reaction potential area of the positive electrode active material 212.

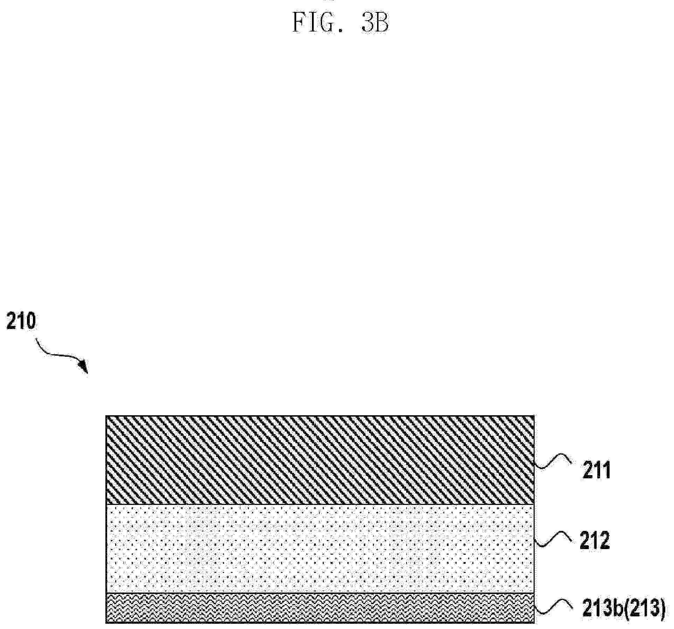

The positive electrode active material 212 may be positioned at least partially in contact with the surface of the positive electrode current collector 211 as shown in FIG. 3B or may be positioned spaced apart from the positive electrode current collector 211 as shown in FIG. 3A. The positive electrode active material 212 may be a material that receives lithium-ions transferred from the negative electrode 220 (e.g., the negative electrode 150 of FIGS. 1A to 1C) through the electrolyte during discharge. The positive electrode active material 212 may be, for example, an olivine-type compound such as lithium cobalt oxide (LixCoO₂), lithium nickel oxide (LixNiO₂), lithium nickel cobalt oxide (Lix(NiCo)O₂), lithium nickel cobalt manganese oxide (Lix(NiCoMn)O₃), lithium nickel cobalt aluminum oxide (Lix(NiCoAl)O₂), spinel-type lithium manganese oxide (LixMn₂O₄), manganese dioxide (MnO₂), lithium iron phosphate (LixFePO₄), and/or lithium manganese phosphate (LixMnPO₄).

The positive electrode safety function layer 213 may be a layer that reduces the risk of fire or other unsafe situations occurring due to short-circuit current and/or chemical reaction that occurs when the positive electrode 210 is in contact with the negative electrode (e.g., the negative electrode 220 of FIG. 2).

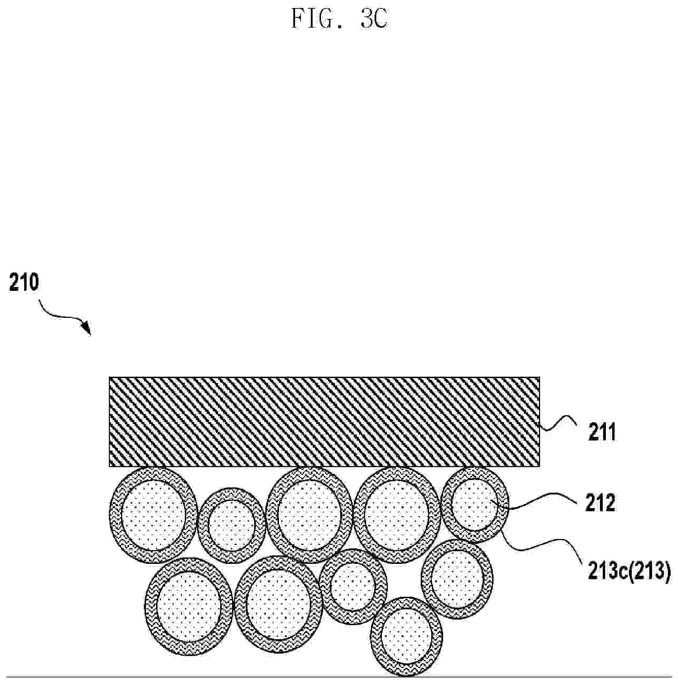

Referring to FIG. 3A, the positive electrode safety function layer 213 according to various embodiments may be a first positive electrode safety function layer 213a disposed between the positive electrode current collector 211 and the positive electrode active material 212. Referring to FIG. 3B, the positive electrode safety function layer 213 according to various embodiments may be a second positive electrode safety function layer 213b positioned on a surface of the positive electrode active material 212 facing the surface where the positive electrode current collector 211 and the positive electrode active material 212 are in contact with each other. Referring to FIG. 3C, the positive electrode safety function layer 213 according to various embodiments may be a third positive electrode safety function layer 213c coating a surface of the particulate positive electrode active material 212 positioned on the surface of the positive electrode current collector 211.

The positive electrode safety function layer 213 (e.g., the first positive electrode safety function layer 213a, the second positive electrode safety function layer 213b, or the third positive electrode safety function layer 213c) of various embodiments may include an olivine phosphate material such as LiFePO₄ and/or LiMnPO₄. The positive electrode safety function layer 213 including the olivine phosphate material has relatively high chemical stability when in contact with a material constituting the negative electrode 220, and thus may prevent chemical reaction and heat generation due to contact between the positive electrode 210 and the negative electrode 220 in the event of damage such as penetration from the outside of the battery.

In various embodiments, the positive electrode safety function layer 213 may include a PTC material. The PTC material may be a material having a positive thermal coefficient (PTC) of electrical resistivity. In various embodiments, the positive electrode safety function layer 213 may include a PTC ceramic or a PTC polymer composite material. The PTC ceramic may include a perovskite-based ceramic such as rare-earth doped BaTiO₃, for example. The PTC polymer composite may include a polymer matrix and conductive particles such as carbon black dispersed within the polymer matrix, and may be a material, the electrical conductivity of which decreases or increases due to expansion or contraction of the polymer matrix according to temperature. The polymer matrix may include materials such as high density polyethylene (HDPE), poly methyl methacrylate (PMMA), ethylene vinyl acetate (EVA), and/or polyvinylidene fluoride (PVDF).

When a short-circuit current flows due to the direct contact between the positive electrode 210 and the negative electrode 220, caused by penetration or pressure from the outside, the PTC material included in the positive electrode safety function layer 213 may increase the internal temperature of the battery, causing the resistivity of the PTC material to increase due to the positive temperature coefficient of the PTC material. Since the short-circuit current is reduced due to the increase in the electrical resistance of the positive electrode safety function layer 213, the damage to the battery due to heat generation by the short-circuit current and the risk of a chain reaction in which the short-circuit current increases may be reduced.

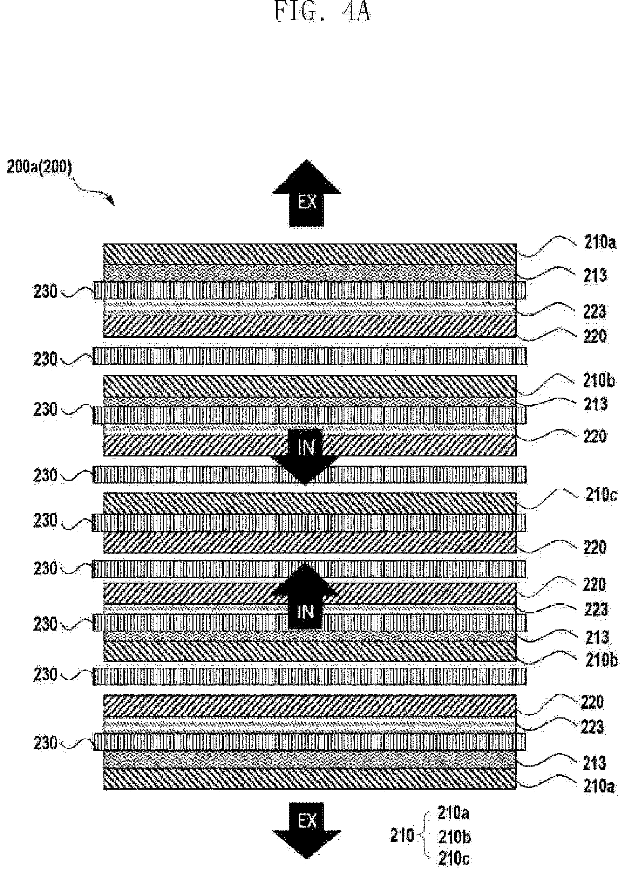

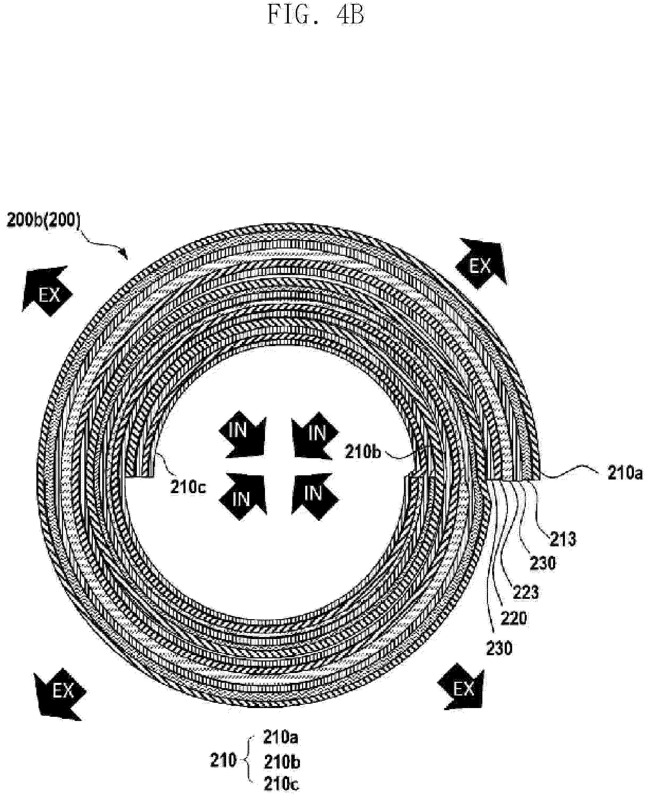

FIGS. 4A and 4B are cross-sectional views of a battery 200a, 200b according to various embodiments.

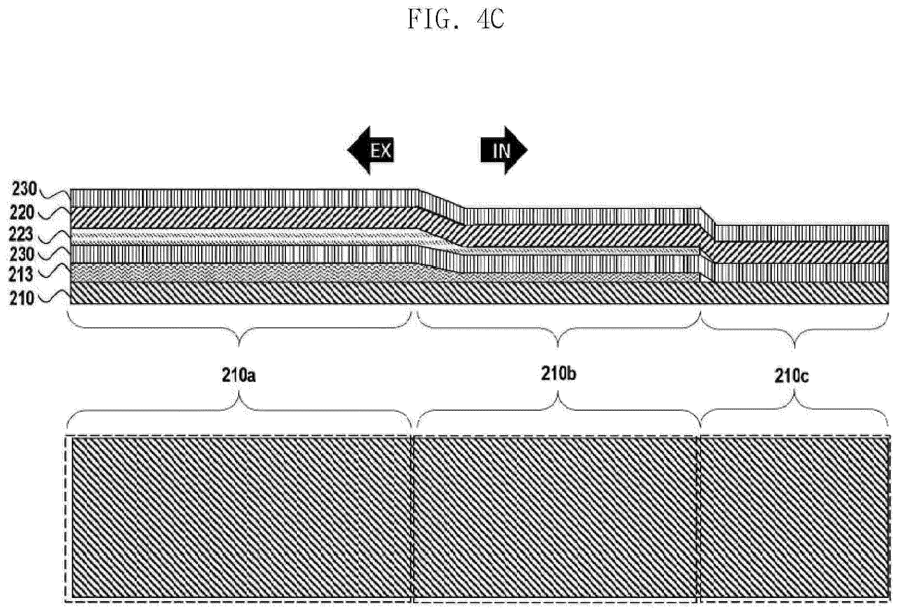

FIG. 4C illustrates a state in which the wound components of the winding-type battery 200b of FIG. 4B are unwound.

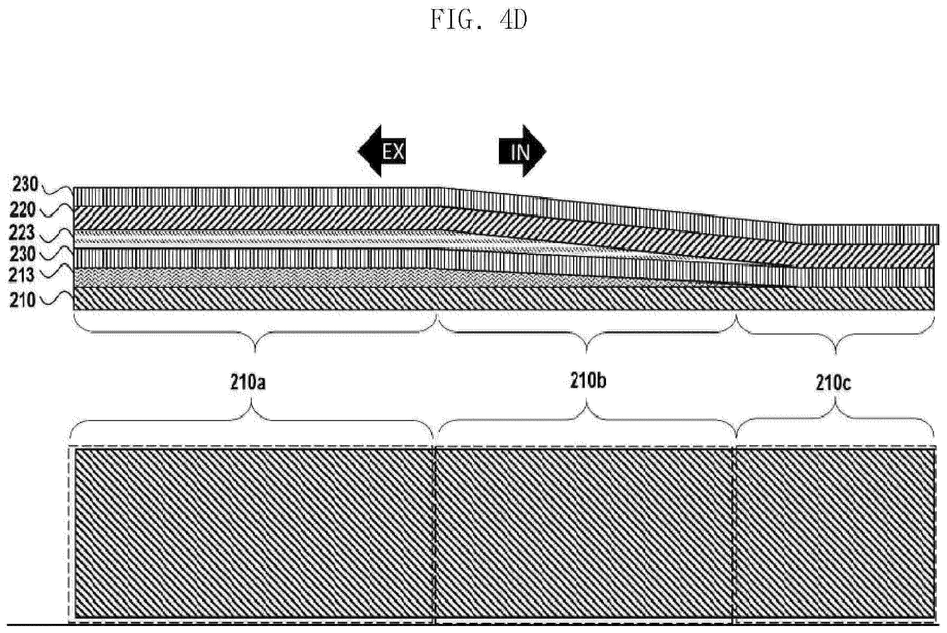

FIG. 4D illustrates a state in which the wound components of a winding-type battery 200b according to another embodiment are unwound.

FIG. 4A is a schematic diagram showing a cross-section of a stack-type battery 200a, for example, the battery 100a of FIG. 1A. FIGS. 4B to 4D illustrate a cross-section of a winding-type battery 200b, for example, the batteries 100b, 100c of FIGS. 1B to 1C, and a state in which the components thereof are unwound.

The cross-section of FIG. 4A is a cross-section taken along line A-A' of FIG. 1A, FIG. 4B is a cross-section taken along line B-B' of FIG. 1B, and FIGS. 4C and 4D are unfolded cross-sections taken along line B-B' of FIG. 1B.

Referring to FIG. 4A, the positive electrode safety function layer 213 may be disposed in at least a part of the inner positive electrode area 210b of the battery. Referring to FIG. 4A, the positive electrode safety function layer 213 of the stack-type battery may be disposed in at least a part of the inner positive electrode area 210b arranged between the outermost positive electrode areas 210a among the plurality of stacked positive electrodes 210. For example, the positive electrode safety function layer 213 may be arranged in an area relatively closer, in the inner positive electrode area 210b, to the outermost positive electrode area 210a. In various embodiments, the thickness of the positive electrode safety function layer 213 may be gradually reduced from the outermost positive electrode area 210a toward the inside (IN direction of FIG. 4A). Although FIG. 4A illustrates an embodiment in which the positive electrode safety function layer 213 is not disposed in the innermost area 210c in the inner positive electrode area 210b, this is an example that does not limit the disclosure, and it will be apparent that the technical idea disclosed in this document may also be applied to an embodiment in which the positive electrode safety function layer 213 is arranged in the innermost area in the inner positive electrode area 210b and has the thinnest thickness.

Referring to FIGS. 4B to 4D, the positive electrode safety function layer 213 of the winding-type battery 200b may extend from the outermost positive electrode area 210a to at least a part of the inner positive electrode area 210b that is wound in a space located inwardly from the outermost positive electrode area 210a. For example, the positive electrode safety function layer 213 may be positioned in an area of the inner positive electrode area 210b, the area being relatively closer to the outermost positive electrode area 210a. In various embodiments, the thickness of the positive electrode safety function layer 213 may be gradually reduced from the outermost positive electrode area 210a toward the inside (IN direction of FIG. 4C). Referring to FIG. 4C, in various embodiments, the thickness of the positive electrode safety function layer 213 may be reduced in a stepwise manner. Referring to FIG. 4D, in various embodiments, the thickness of the positive electrode safety function layer 213 may be continuously reduced.

FIGS. 4A to 4D illustrate an embodiment in which the positive electrode safety function layer 213 is not arranged in the innermost area in the inner positive electrode area 210b, but this is an example that does not limit the disclosure, and it will be apparent that the technical idea disclosed in this document may also be applied to an embodiment in which the positive electrode safety function layer 213 is arranged in the innermost area in the inner positive electrode area 210b and has the thinnest thickness.

The safety of the battery may be improved by placing the positive electrode safety function layer 213 even in at least a part of the inner positive electrode area 210b of the battery. In addition, the positive electrode safety function layer 213 positioned in the inner positive electrode area 210b to have a relatively thin thickness, minimizing a decrease in the energy density and/or power density of the battery, which may occur due to placing the positive electrode safety function layer 213 in the inner positive electrode area 210b. The thickness of the positive electrode safety function layer 213 in the inner positive electrode area 210b may be adjusted to optimize the safety of the battery and the energy density and/or power density of the battery.

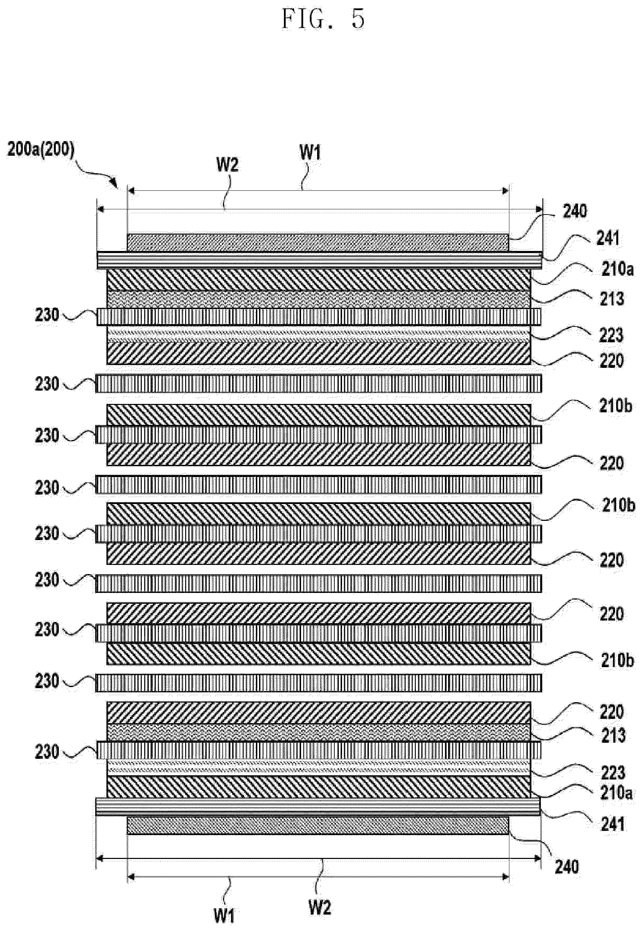

FIG. 5 is a cross-sectional view of a battery according to various embodiments.

Referring to FIG. 5, a battery (e.g., the battery 100 or the battery 200) according to various embodiments may include a short-circuit protection layer 240. The short-circuit protection layer 240 may be arranged to correspond to an outer peripheral surface of the outermost positive electrode area 210a, spaced apart from the outermost positive electrode area 210a, and electrically connected to the negative electrode 220. For example, the short-circuit protection layer 240 may be spaced apart from the outermost positive electrode area 210a by an insulation layer 241. The short-circuit protection layer 240 may include a conductive material, for example, a metal material. The short-circuit protection layer 240 may include a material that is identical or similar to a current collector of the opposite electrode of an electrode facing the short-circuit protection layer 240. For example, the short-circuit protection layer 240 facing the positive electrode 210 may include a material identical or similar to the negative electrode 220 current collector (e.g., copper (Cu)). In various embodiments, the negative electrode 220 current collector and the short-circuit protection layer 240 may each include a tab configured to draw current to the outside, and the tabs may be connected by mutual welding, enabling the negative electrode 220 and the short-circuit protection layer 240 to be electrically connected to each other.

When an electronic device is damaged externally, such as by penetration or pressure, a short-circuit current may flow in the areas of the positive electrode 210 and the negative electrode 220 where the positive electrode/negative electrode active materials are disposed, increasing the risk of fire. According to an embodiment, due to the short-circuit protection layer 240 included in the battery, when external damage occurs, a short-circuit may occur first in the short-circuit protection layer 240 rather than in the area where the positive electrode/negative electrode active materials are disposed. As a result, the potential difference in the area where the positive electrode/negative electrode active materials are disposed may be reduced, thereby limiting the short-circuit current and reducing the risk of fire and other unsafe situations.

In various embodiments, the width (W1) of the short-circuit protection layer 240 may be narrower than the width (W2) of the outermost positive electrode area 210a. In case that the width (W1) of the short-circuit protection layer 240 is wider than the outermost positive electrode area 210a, the short-circuit protection layer 240 may be deformed when an external impact is applied due to the battery being dropped. As a result, the short-circuit protection layer 240 may be in contact with the outermost positive electrode area 210a, causing the risk of a short-circuit. Therefore, this risk may be reduced by making the width (W1) of the short-circuit protection layer 240 narrower than the width (W2) of the outermost positive electrode area 210a.

The battery 200 according to various embodiments of the disclosure may include a battery case 180 configured to divide the inside and the outside of the battery 200, and an electrode assembly including at least one positive electrode 210 positioned inside the battery case 180, at least one negative electrode 220 positioned inside the battery case 180 to face the positive electrode 210, and at least one separator 230 disposed between the positive electrode 210 and the negative electrode 220.

The positive electrode 210 may include a positive electrode safety function layer 213 positioned in an area which includes an outermost positive electrode area 210a and is closest, among areas of the positive electrode 210, to the inner surface of the battery case 180.

In various embodiments, the battery 200 may be a winding-type battery 200b in which the electrode assembly are wound in a mutually overlapping manner, and the positive electrode 210, the negative electrode 220, and the separator 230 may be wound such that the outermost positive electrode area 210a is positioned toward the outside of the battery 200.

In various embodiments, the positive electrode safety function layer 213 may extend from the outermost positive electrode area 210a in the positive electrode 210 to at least a part of the inner positive electrode area 210b, which is an area wound in a space positioned toward the inside of the battery 200, and the positive electrode safety function layer 213 may be configured in the positive electrode 210 such that a thickness of the positive electrode safety function layer 213 disposed in the outermost positive electrode area 210a is thicker than the positive electrode safety function layer 213 extended to the inner positive electrode area 210b.

In various embodiments, the thickness of the positive safety function layer 213 may be reduced in a stepwise manner toward the inside of the battery 200.

In various embodiments, the thickness of the positive safety function layer 213 may be continuously reduced toward the inside of the battery 200.

In various embodiments, the battery 200 may be a stack-type battery 200a obtained by alternately stacking a plurality of positive electrodes 210, a plurality of negative electrodes 220, and a plurality of separators 230, and the outermost positive electrode area 210a may correspond to the positive electrodes 210 located at the uppermost layer and the lowermost layer among the plurality of stacked positive electrodes 210.

In various embodiments, the positive electrode safety function layer 213 may be further disposed in at least a part of the inner positive electrode area 210b corresponding to the positive electrodes 210 stacked between the outermost positive electrode areas 210a, and the positive electrode safety function layer 213 may be configured such that, among areas of the positive electrode 210, a thickness of the positive electrode safety function layer 213 disposed in the outermost positive electrode area 210a is thicker than the thickness of the positive electrode safety function layer 213 disposed in the inner positive electrode area 210b.

In various embodiments, the thickness of the positive electrode safety function layer 213 may be gradually reduced toward the inside of the battery 200.

In various embodiments, the positive electrode 210 may include a positive electrode current collector 211 and a positive electrode active material 212 positioned on a surface of the positive electrode current collector 211, and
the positive electrode safety function layer 213 may be positioned between the positive electrode current collector 211 and the positive electrode active material 212.

In various embodiments, the positive electrode 210 may include the positive electrode current collector 211 and the positive electrode active material 212 positioned on the surface of the positive electrode current collector 211, and the positive electrode safety function layer 213 may coat a surface of the positive electrode active material 212.

In various embodiments, the positive electrode safety function layer 213 may include a positive temperature coefficient (PTC) material.

In various embodiments, the PTC material may include a polymer composite.

In various embodiments, the positive electrode safety function layer 213 may include a phosphate-based olivine material.

In various embodiments, the battery 200 may include a short-circuit protection layer 240 disposed inside a case thereof to be spaced apart from the outermost positive electrode area 210a while surrounding at least a part of the outer peripheral surface of the outermost positive electrode area 210a, the short-circuit protection layer being electrically connected to the negative electrode 220 and having a conductive material.

In various embodiments, the width of the short-circuit protection layer 240 may be narrower than the width of the outermost positive electrode area 210a.

In various embodiments, the battery 200 may further include a negative electrode safety function layer 223 disposed in an area of the negative electrode 220 corresponding to an area of the positive electrode 210 where the positive electrode safety function layer 213 is disposed.

According to various embodiments of the disclosure, a battery 200 may include a case of the battery 200 configured to divide the inside and the outside of the battery 200, at least one positive electrode 210 positioned inside the case of the battery 200, at least one negative electrode 220 positioned inside the case of the battery 200 to face the positive electrode 210, at least one separator 230 disposed between the positive electrode 210 and the negative electrode 220, and a safety function layer 213, 223 disposed in at least one of the positive electrode 210 or the negative electrode 220. The thickness of the safety function layer 213, 223 may increase toward a position relatively closer to the outside of the battery 200.

In various embodiments, the safety function layer 213, 223 may be disposed in the positive electrode 210 and may include a positive temperature coefficient (PTC) material.

In various embodiments, the PTC material may include a polymer composite.

In various embodiments, the safety function layer 213, 223 may be disposed in the positive electrode 210 and may include a phosphate-based olivine material.

The embodiments disclosed in this document disclosed in this specification and drawings are only specific examples presented to easily explain the technical contents according to the embodiments disclosed in this document and to help understand the embodiments disclosed in this document, and are not intended to limit the scope of the embodiments disclosed in this document. Therefore, the scope of the various embodiments disclosed in this document should be interpreted as including all changes or modified forms derived based on the technical ideas of the various embodiments disclosed in this document in addition to the embodiments disclosed herein.

## Claims

1. A battery comprising:
a battery case configured to divide an inside and an outside of the battery; and
an electrode assembly comprising at least one positive electrode positioned inside the battery case, at least one negative electrode positioned inside the battery case to face the positive electrode, and at least one separator disposed between the positive electrode and the negative electrode,
wherein the positive electrode comprises a positive electrode safety function layer disposed in an area which comprises an outermost positive electrode area and is closest, among areas of the positive electrode, to an inner surface of the battery case.

2. The battery of claim 1, wherein the battery is configured as a winding-type battery in which the electrode assembly is wound such that parts thereof overlap each other,
wherein the positive electrode, the negative electrode, and the separator are wound such that the outermost positive electrode area is positioned toward the outside of the battery,
wherein among areas of the positive electrode, the positive electrode safety function layer extends from the outermost positive electrode area to at least a part of an inner positive electrode area which is an area wound in a space positioned toward the inside of the battery, and
wherein the positive electrode safety function layer is configured such that, among areas of the positive electrode, a thickness of the positive electrode safety function layer disposed in the outermost positive electrode area is thicker than a thickness of the positive electrode safety function layer extended to the inner positive electrode area.

3. The battery of claim 2, wherein a thickness of the positive electrode safety function layer is reduced in a stepwise manner toward the inside of the battery.

4. The battery of claim 2, wherein a thickness of the positive electrode safety function layer is continuously reduced toward the inside of the battery.

5. The battery of claim 1, wherein the battery is configured as a stack-type battery comprising the plurality of positive electrodes, the plurality of negative electrodes, and the plurality of separators, which are alternately stacked with one another, and
wherein the outermost positive electrode area corresponds to positive electrodes positioned in an uppermost layer and a lowermost layer among the plurality of stacked positive electrodes.

6. The battery of claim 5, wherein the positive electrode safety function layer is further disposed in at least a part of an inner positive electrode area corresponding to positive electrodes stacked between the outermost positive electrode areas,
wherein the positive electrode safety function layer is configured such that, among areas of the positive electrode, a thickness of the positive electrode safety function layer disposed in the outermost positive electrode area is thicker than a thickness of the positive electrode safety function layer disposed in the inner positive electrode area, and
wherein a thickness of the positive electrode safety function layer is gradually reduced toward the inside of the battery.

7. The battery of claim 1, wherein the positive electrode comprises a positive electrode current collector and a positive electrode active material positioned on a surface of the positive electrode current collector, and
wherein the positive electrode safety function layer is positioned between the positive electrode current collector and the positive electrode active material.

8. The battery of claim 1, wherein the positive electrode safety function layer comprises a positive temperature coefficient (PTC) material.

9. The battery of claim 8, wherein the PTC material comprises a polymer composite.

10. The battery of claim 1, wherein the positive electrode safety function layer comprises a phosphate-based olivine material.

11. The battery of claim 1, wherein the battery comprises a short-circuit protection layer disposed in the battery case to be spaced apart from the outermost positive electrode area while surrounding at least a part of an outer peripheral surface of the outermost positive electrode area, the short-circuit protection layer being electrically connected to the negative electrode and having a conductive material, and
wherein a width of the short-circuit protection layer is narrower than a width of the outermost positive electrode area.

12. A battery comprising:
a battery case configured to divide an inside and an outside of the battery;
at least one positive electrode positioned inside the battery case;
at least one negative electrode positioned inside the battery case to face the positive electrode;
at least one separator disposed between the positive electrode and the negative electrode; and
a safety function layer disposed in at least one of the positive electrode and the negative electrode,
wherein a thickness of the safety function layer increases toward a position relatively closer to the outside of the battery.

13. The battery of claim 12, wherein the safety function layer is disposed in the positive electrode and comprises a positive temperature coefficient (PTC) material.

14. The battery of claim 13, wherein the PTC material comprises a polymer composite.

15. The battery of claim 12, wherein the safety function layer is disposed in the positive electrode and comprises a phosphate-based olivine material.
